Europäisches Patentamt

European Patent Office

Office européen des brevets

(1) Publication number: **0 058 678**
**B1**

(12) **EUROPEAN PATENT SPECIFICATION**

(45) Date of publication of patent specification: **15.05.85**

(51) Int. Cl.⁴: **F 02 B 37/00, F 02 C 6/12**

(21) Application number: **81902050.4**

(22) Date of filing: **03.07.81**

(86) International application number:
**PCT/DK81/00068**

(87) International publication number:
**WO 82/00174 21.01.82 Gazette 82/03**

(54) **METHOD OF OPERATING AN INTERNAL COMBUSTION ENGINE WITH TURBOCHARGE SYSTEM, AND INTERNAL COMBUSTION ENGINE WITH TURBOCHARGE SYSTEM FOR USE IN CARRYING OUT THE METHOD.**

(30) Priority: **04.07.80 DK 2902/80**

(43) Date of publication of application:
**01.09.82 Bulletin 82/35**

(45) Publication of the grant of the patent:
**15.05.85 Bulletin 85/20**

(84) Designated Contracting States:
**AT CH DE FR GB LI LU NL SE**

(56) References cited:
**GB-A- 941 532**
**US-A-2 245 163**
**US-A-2 306 277**
**US-A-3 914 944**
**US-A-3 925 989**
**US-A-4 179 892**

(73) Proprietor: **OESTERGAARD, Anders**
**Brogaardsvej 103**
**DK-2820 Gentofte (DK)**

(72) Inventor: **OESTERGAARD, Anders**
**Brogaardsvej 103**
**DK-2820 Gentofte (DK)**

(74) Representative: **Zimmermann, Heinz, Dipl.-Ing.**
**et al**
**Patentanwälte Leinweber & Zimmermann**
**Rosenthal 7/II Aufg.**
**D-8000 München 2 (DE)**

Courier Press, Leamington Spa, England.

## Description

The invention relates generally to a method of operating an internal combustion engine with turbocharge system. By turbocharge system is to be understood herein one or more turbine operated compressors which feed scavenging-charging air to the cylinder or cylinders of the engine, through one or more air coolers.

It is usage in the trade that an internal combustion engine with turbocharge system, when delivered, is adjusted as favourably as possible in relation to the climatic and environmental conditions existing at the time and place in question. In the case of an internal combustion engine with turbocharge system for use as a marine engine, the turbocharge system is so dimensioned and adjusted at delivery with fixed adjustments in such a manner that the appurtenant internal combustion engine exhibits optimum operation at the testbed trial in the workshop at the time of delivery, i.e. in such a manner that the engine renders the best possible results so as to fulfil the prescribed conditions in respect of maximum performance and the specific fuel consumption within the prescribed and constructionally contemplated engine control limits and under particularly favourable conditions. The present invention is based on the recognition that an engine with turbocharge system, which is dimensioned, adjusted, and fixed in its adjustment of the turbocharge system in the manner described, will not in the later operation, frequently under particularly adverse conditions, on an average yield a maximum of energy at a minimum of fuel consumption and at the lowest possible thermal load, when such engine and turbocharge system are combined with means for recovering energy from the exhaust gas from the engine. Considering e.g. a marine engine, which is delivered in a temperate climate, the turbocharge system is adjusted to have a turbine area such that at the intake temperature and other climatic conditions, such as the barometric level, and special conditions of installation existing at the location in question, the turbocharge system will yield the highest possible amount of scavenging-/charging air so as to achieve the best possible scavenging and the prescribed charging pressure, and thereby the engine will in the best possible way fulfil the prescribed conditions at low temperatures of the parts of the engine. If, however, the ambient conditions are changed in an adverse direction, e.g. if the ship in question sails in tropic waters, the temperature of the air intake of the turbocharger will rise in relation to that normally prevailing at delivery, and at the same time the barometric level may be low, so that the engine operates under conditions less favourable than at delivery. A higher intake temperature increases the compressional work per weight unit of air, and this is not made up for by a correspondingly increased energy from the turbine portion of the turbocharge system. Consequently, the amount of air input to the engine is reduced, and the same will happen at low barometric level. This again means that the quantity by weight of air supplied to the cylinders of the engine is reduced. It should be mentioned that the abstract of JP 53-56413 discloses an internal combustion engine and at turbocharge system which is fed by exhaust gas from the engine and which feeds the engine with fresh air. A thermosensor and a pressure sensor detect the state of the air fed to the compressor part of the turbocharge system and control a by-pass valve which opens and closes a by-pass through which the exhaust gas of the engine is passed around the turbine part of the turbocharge system by the signals from the sensors. By this arrangement it is possible to supercharge always by an adequate quantity of air against dilution of air density due to uprising of the atmospheric temperature or lowering of the atmospheric pressure. The exhaust gas thus by-passed is fed to the atmosphere through a silenser together with the exhaust gas leaving the turbine part of the turbocharge system.

As regards the prior art reference should also be made to US specification No. 2245163 which discloses a power plant for an air craft comprising an engine and two turbines. One of the turbines drives a compressor for supercharging the cylinders of the engine and the other turbine assists in driving the main shaft of the engine by means of a mechanical drive comprising a pinion mounted on the turbine shaft and meshing with a bevel gear secured on the main shaft of the engine. The cylinders of the engine are divided into two groups each feeding an exhaust manifold. Each manifold is divided into two chambers. One of the chambers of one of the manifolds is always connected to one inlet chamber of the nozzle box of the turbine for supercharging and one of the chambers of the other manifold is always connected to one of the inlet chambers of the nozzle box of the turbine driving the main shaft. The other chamber of said one manifold may feed exhaust gas to another inlet chamber of the nozzle box of the turbine for supercharging or to another inlet chamber of the nozzle box of the turbine driving the main shaft or to both said turbine inlet chambers. The other chamber of said other manifold may likewise feed a third inlet chamber of the nozzle box of the turbine for supercharging or a third inlet chamber of the nozzle box of the turbine driving the main shaft or both said third inlet chambers. Both turbines exhaust the used exhaust gas directly into the atmosphere.

According to the present invention a method for operating the combination of a diesel engine, a turbocharge system including air cooling means for cooling fresh air to be fed to said engine and means for recovering energy from the exhaust gas from said engine comprises the following steps:

at low intake temperature, feeding said turbocharge system with a portion only of the exhaust gas delivered by the engine and conducting the remaining fraction of the exhaust gas to the atmosphere in by-pass to the turbocharge system and feeding the engine with only the amount of fresh air delivered by said turbocharge system fed by said gas portion, said gas portion being so controlled that said amount of fresh air is sufficient for scavenging and charging the engine to operate at the prescribed conditions,

at intake temperature decreasing from said low temperature, increasing the ratio between said gas fraction and said gas portion,

at intake temperature increasing from said low temperature, decreasing the ratio between said gas fraction and said gas portion, and

at said low intake temperature, at said decreasing and at said increasing temperature, conducting both said gas fraction and said gas portion from said turbocharge system to the atmosphere via said energy recovering means.

The invention provides the advantage that an improved use of the energy of the fuel fed to the engine as obtained in particular at low temperatures due to the utilization of the heat remaining in the exhaust gas after the exhaust gas has left the turbocharge system and of the heat contained in the exhaust gas fraction by-passing the turbocharge system. Such energy recovering is of particular importance at low temperature because at such temperature the demand for energy recovering is high both for heating purposes and for driving auxiliary machinery. On the other hand the engine will not be charged or scavenged at optimum conditions as the case would be if all the exhaust gas were used for driving the turbocharge system but it has been proved that this drawback is more than compensated for by utilizing the heat content of the exhaust gas as proposed according to the present invention. Moreover, under temperate climatic conditions with periodic low temperatures, a reserve of energy is in readiness for the turbocharge system so that, in case the engine has to operate under warmer conditions than those prevailing at the time of delivery, the turbocharge system can be caused to supply a relatively increased amount of scavenging-/charging air to the engine, the turbocharge system receiving in these changed circumstances an increased portion of the exhaust gas delivered by the engine, viz. by decreasing the proportion between the fraction of the exhaust gas by-passing the turbocharge system and the portion of the exhaust gas supplied to the turbocharge system. Thereby the conditions of operation of the engine are improved under otherwise adverse circumstances, viz. partly by reduction of the thermal load and partly by reduction of the fuel consumption. Similarly, viz. by reducing the said proportion, a compensation can be made for drop of the barometric level. Thus, the adjustment of the engine is advantageously controlled in time with fluctuating temperature conditions, and preferably also in time with fluctuating barometric level.

Preferably, according to an embodiment of the invention wherein said means for recovering energy from said exhaust gas comprise a first energy recovering apparatus and a second energy recovering apparatus said method comprising the further steps of conducting said gas portion from said turbocharge system to the atmosphere via said first energy recovering apparatus only and conducting said gas fraction to the atmosphere via said second energy recovering apparatus and said first energey recovering apparatus in series. By means of this embodiment of the invention it is achieved that the high level energy of the gas fraction by-passing the turbocharge system may be used e.g. for the operation of generators for supplying illumination or other forms of auxiliary energy. Such utilization is particularly advantageous because under temperate or cold conditions a high fraction of by-passed exhaust gas will be available for such energy production and exactly under such conditions there will be a great demand for such a production.

Moreover, when an engine with a turbocharge system is delivered, the turbocharge system will operate at its maximum, i.e. at its highest efficiency. Experience has shown, however, that the efficiency of a turbocharge system decreases gradually in the course of time, viz. primarily as a consequence of smudging. This occurrence, too, can be compensated for by means of the invention, viz. by supplying a relatively increased portion of exhaust gas to the turbocharge system and thereby to compensate for the dropping efficiency of the turbocharge system. On account of the smudging of the turbocharge system explained above, an overhaul of the turbocharge system is performed at suitable time intervals, whereby the efficiency of the turbocharge system again increases. The method according to the present invention also involves the possibility of compensating for the improved efficiency of the turbocharge system obtained after such an overhaul, viz. if the proportion between the fraction of the exhaust gas by-passed to the energy recovering means and the portion supplied to the turbocharge system is increased after overhaul of the turbocharge system. Thereby the turbocharge system can be fed with the exact amount of exhaust gas corresponding to the demand of the turbocharger after such an overhaul. Hereby a compensation is obtained for a further factor giving rise to fluctuations in respect of the working conditions, thermal load and fuel consumption of the engine, and which would reduce the average degree of utilization of the engine.

The invention also relates to a combination of a diesel engine and a turbocharge system for carrying out the method referred to. According to the invention in such combination the turbocharge system is connected with the exhaust pipe system of the engine by feeding means for being fed with exhaust gas from said engine, said turbocharge system being connected with said engine for supplying fresh scavenging and charging air to said engine via air cooling means, said combination comprising means for recovering energy from the exhaust gas from said engine, said energy recovering means being connected with the exhaust gas outlet of said turbocharge system so as to receive exhaust gas from said turbocharge system, said energy recovering means, moreover, being connected with said exhaust pipe system by means of a passage by-passing said turbocharge system so as to receive a fraction of said exhaust gas from said exhaust pipe system, throttle means being arranged in said by-pass passage so as to control the ratio between said fraction of exhaust gas passing through said by-pass passage to said energy recovering means and said portion of exhaust gas passing through said feeding means connecting said turbocharge system and said exhaust pipe system, said throttle means having a position, wherein the free passage area of said by-pass passage allows only such fraction of said exhaust gas to flow to said energy recovering means that said gas portion fed to said turbocharge system is sufficient for causing said turbocharge system to feed said engine with an amount of air sufficient for scavenging and charging the engine to operate at the prescribed conditions at low intake temperature, said throttle means being controllable by temperature sensing means adapted to move said throttle means in direction towards opening of said throttle means at intake temperature decreasing from said low temperature and to move said throttle means in direction towards closing said throttle means at intake temperature increasing from said low temperature.

The invention will now be further explained with reference to the drawing, in which

Fig. 1 diagrammatically shows a first embodiment of the internal combustion engine with turbocharge system according to the invention,

Fig. 2 diagrammatically a control system for the engine shown in Fig. 1,

Fig. 3 a second embodiment of the internal combustion engine with turbocharge system according to the invention, in end view,

Fig. 4 the same in top view, but with some parts omitted,

Fig. 5 diagrammatically a control system for the engine shown in Figs. 3 and 4,

Fig. 6 diagrammatically a gas turbine for utilization of the energy in a fraction of the exhaust gas delivered by the engine of Figs. 3 and 4, and

Fig. 7 a section through the gas turbine of Fig. 6 with appurtenant generator.

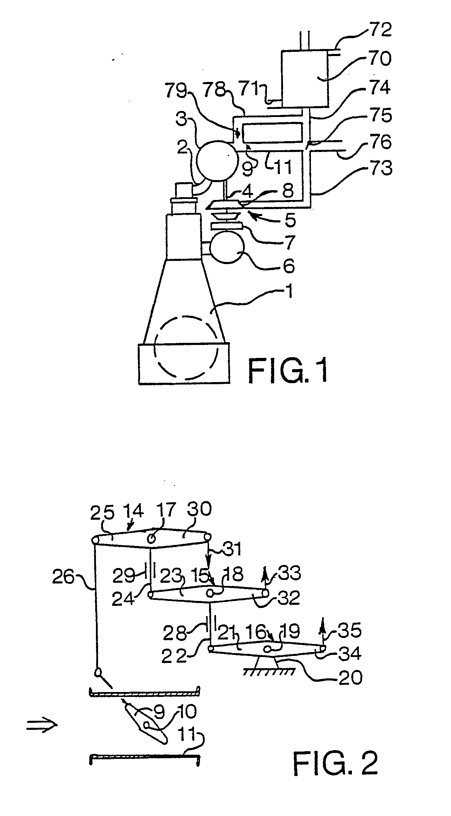

In the drawing, 1 is an engine in the form of a diesel engine. The exhaust pipe system of the engine is diagrammatically shown at 2 and this is connected with a receiver 3 for exhaust gas. The receiver is connected via feeding means, diagrammatically illustrated as a passage 4, with a turbocharge system 5, likewise diagrammatically illustrated, the pressure side of which feeds a receiver 6 via an air cooler 7, from which the engine is provided with scavenging and charging air. In the embodiment shown in Fig. 1, the engine is provided with means for recovering energy in the form of a diagrammatically illustrated steam boiler 70 for utilizing the thermal energy in the exhaust gas. The boiler 70 has a pipe stub 71 for the supply of water and a pipe stub 72 for delivering steam. The boiler is connected with the exhaust gas receiver 3 by by-pass means, diagrammatically illustrated in the form of a passage 11, in which control means are provided, diagrammatically illustrated in the form of a control throttle 9. Moreover, the boiler is connected through a passage 73 to the exhaust gas outlet side of the turbine portion 8 of the turbocharge system. The two passages 11 and 73 are connected to a common inlet 74 to the boiler 70, but they may by means of a throttle 75 be connected with an exhaust conduit 76 leading directly to the atmosphere.

By means of the passage 11 and the throttle 9 a greater or smaller fraction of the exhaust gas, which would otherwise be supplied to the turbocharge system 5 through the passage 4, may, depending on the position of the throttle 9, be conducted in by-pass to the turbocharge system and directly to the boiler 70 through the inlet 74, or directly to the atmosphere through the exhaust conduit 76. It will be understood that if it is not desired to utilize the thermal energy of the exhaust gas by means of the boiler or other form of energy converter or heat exchanger, the passage 11 and the passage 73 are connected directly to the atmosphere by means of the throttle 75.

The turbocharge system 5 and the engine 1 are so constructed and dimensioned, and the turbocharge system has an efficiency so high, that under temperate conditions the turbocharge system will yield the air necessary for scavenging and charging the cylinders of the engine 1, even when a certain fraction of exhaust gas is conducted in by-pass to the turbocharge system 5 by means of the passage 11 and the throttle 9.

Fig. 2 shows diagrammatically how the engine 1 and its turbocharge system 5 of Fig. 1 are controlled under varying conditions. Fig. 2 shows again the diagrammatically represented throttle 9 which is rotatably mounted on a shaft 10 in the interior of the passage 11. As shown in Fig. 2, the throttle 9 is connected with a lever system consisting of three levers 14, 15 and 16, each of which is mounted for rotation about a shaft 17, 18 and 19, respectively belonging thereto. This control system is to be understood as purely symbolic and is only intended to illustrate one way in which such a control system may be constructed. The shaft 19 of the lowermost lever 16 is fixedly supported relatively to a part of the engine or the turbocharge system by means of a support 20, and one arm 21 of the lever 16 is connected through a rod 22 with the shaft 18 of the lever 15, and one arm 23 of the lever 15 is connected through a rod 24 with the shaft 17 of the lever 14. One arm 25 of the lever 14 is connected through a rod connection 26 with the throttle 9. Each of the rods 22 and 24 is guided in a vertical direction by means of a sliding guide diagrammatically indicated at 28 and 29, respectively.

The second arm 30 of the lever 14 is connected in a manner not illustrated with a sensor which senses the temperature of the intake air of the turbocharge system 5 and which at increasing intake temperature, possibly in combination with dropping barometric level, moves the arm 30 in the direction of the arrow 31. Thereby the throttle 19 is moved in the closing direction, which again means that a smaller fraction of exhaust gas is by-passed, or in other words a higher portion of exhaust gas flows to the turbocharge system 5. Thereby a compensation is made for the increasing intake temperature, a greater quantity by weight of air being supplied to the receiver 6 from the compressor portion of the turbocharge system 5.

The second arm 32 of the lever 15 is connected in a manner not illustrated with an instrument governed by the load of the engine. This end 32 of the lever 15 may e.g. be moved from the load and control handle of the engine, and it is moved in the direction of the arrow 33 at increasing load of the engine. Thereby the rod 24 and consequently the shaft 17 are moved downwards, and consequently the throttle 10 is moved in a direction towards increase of the by-passed fraction. In other words, the gas portion supplied to the turbocharge system is decreased and thereby the scavenging and charging of the engine are reduced so that the scavenging and charging pressure can be kept as close to and, if necessary, exactly on the design value.

The second arm 34 of the lever 21 is moved in dependence on the efficiency of the turbocharger 5. The efficiency and air output of a turbocharger drop from the time of delivery of the engine in question, i.e. the time when the engine is subjected to its final test run and is delivered. Experience shows that the good efficiency and air output which the turbocharge system exhibits at the final test run cannot be obtained later unless the turbocharge system is completely renovated. Thus, there will always be an initial drop of the efficiency and air output after the taking into use of the turbocharge system, and moreover the efficiency and air output of the turbocharge system drop in the later operation, particularly owing to smudging. The latter may be remedied by performing an overhaul of the turbocharge system At a drop of the efficiency of the turbocharge system the arm 34 is moved opposite to the direction of the arrow 35, whereby the rod 22 and thereby the shaft 18 are lifted, which again results in lifting of the rod 24 and the shaft 17 so that in other words the throttle 9 is moved in the closing direction. Now a smaller fraction of gas is by-passed, and the turbocharge system is provided with the extra amount of gas necessary for compensating for the dropping efficiency and air output of the turbocharger. Upon overhaul of the turbocharge system, which is performed at predetermined time intervals, viz. when smudging becomes excessive, the arm 34 is moved in the direction of the arrow 35, whereby the throttle 9 is moved in the opening direction. Owing to the initial drop of the efficiency and the air output explained above it will be understood that upon an overhaul a smaller fraction of gas is to be branched off than was the case at the time of taking into use of the turbocharge system, and consequently the throttle 9 should be closed beyond the position it occupied at the time of taking into use in order that the resulting increase of the portion of gas supplied to the turbocharge system may compensate for the initial drop. This can be done by connecting the lever 16 with means, not shown, for shifting its control range in such a manner that after the initial drop and an overhaul of the turbocharge system have taken place, the lever 16 regulates the position of the throttle between a more closed and a less open position than was the case in the time interval between the taking into use and the first overhaul. Seeing that, in other words, once the initial drop has occurred, the control is to be performed as if the passage 11 had a smaller area than before the initial drop occurred, it is possible, instead of shifting the control range of the lever 16, to use another solution, which is shown in Fig. 1 and consists in the provision of a shunt conduit 78 which connects the receiver 3 or the passage 11 upstream of the throttle 9 with the passage 74, and which contains a throttle 79. During the time when the initial drop takes place the throttle 79 is open so that the portion of gas not required for the turbocharge system during the period of maximum efficiency and air output is passed either to the boiler 70 or to the atmosphere, depending on the position of the throttle 75. When the initial drop has taken place, the throttle 79 is closed, and the correspondingly increased portion of gas is supplied to the turbocharge system 5 through the passage 4, thereby to compensate for the initial drop. Owing to this arrangement, the lever 16 need only have a control range corresponding to the variation of the efficiency and air output of the turbocharge system occurring between the overhauls.

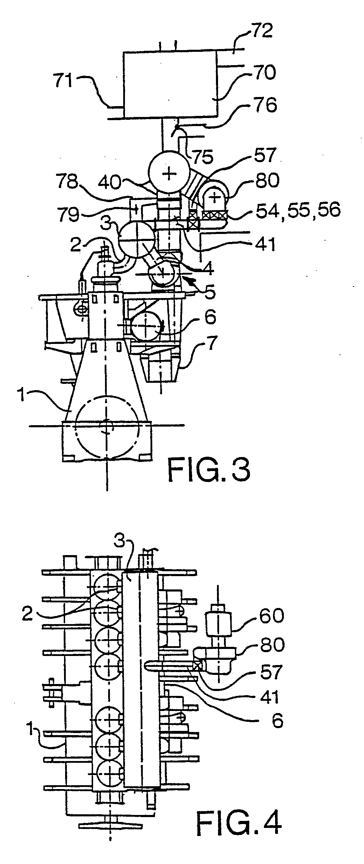

In the embodiment of the engine with turbocharge system according to the invention illustrated in Figs. 3 and 4, the reference characters used are on the whole the same as in Fig. 1, 1 referring to the engine as such, 2 the exhaust system of the engine, 3 a receiver which receives the exhaust gas from the cylinders, and 4 diagrammatically representing feeding means illustrated in the form of a passage for supplying exhaust gas from the receiver 3 to the turbocharge system of the engine which is denoted 5. The turbocharge system feeds via an air cooler 7 a receiver 6, which again feeds scavenging and charging air to the engine. The turbocharge system 5 delivers the gas used by it to an outlet passage system 40.

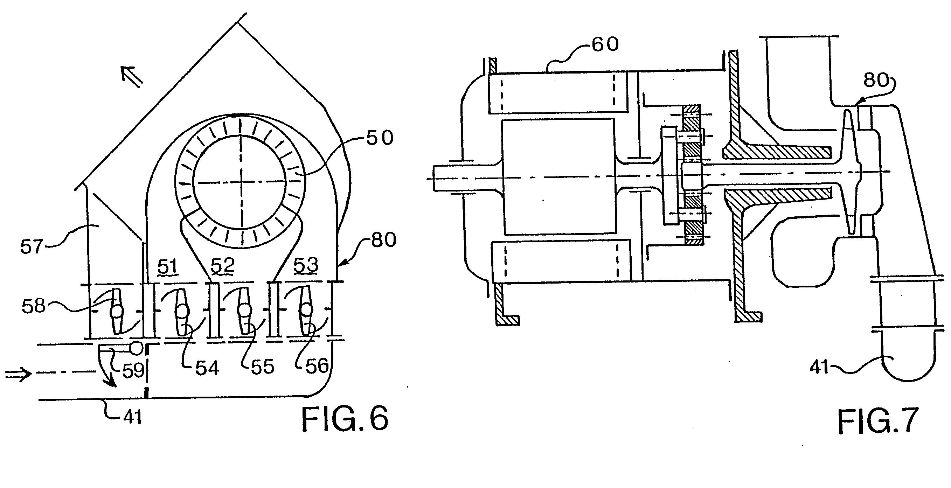

In the embodiment of Fig. 3, a second energy recovering apparatus 80 is inserted between the receiver 3 and the outlet passage system, which apparatus serves to utilize the fraction of the exhaust gas by-passing the turbocharge system for secondary energy production, viz. in the form of a gas turbine coupled to a generator, the gas turbine being diagrammatically illustrated in Figs. 6 and 7. The input side of the gas turbine is connected to the exhaust gas receiver 3 by means of a tubular passage 41 which, as illustrated in Fig. 6, leads to the input side of the gas turbine there illustrated. The output side of the gas turbine is connected with the outlet passage system 40. Like in the case of the engine of Figs. 1 and 2, the outlet passage system 40 includes a first energy recovering apparatus in the form of a boiler 70, Fig. 3, e.g. a steam boiler with an input 71 and an output 72, or some other form of apparatus for utilizing the thermal energy of the exhaust gas. The boiler 70 in Fig. 3 may, like that in Fig. 1, be disconnected by means of a throttle 75 in an exhaust conduit 76 opening into the atmosphere.

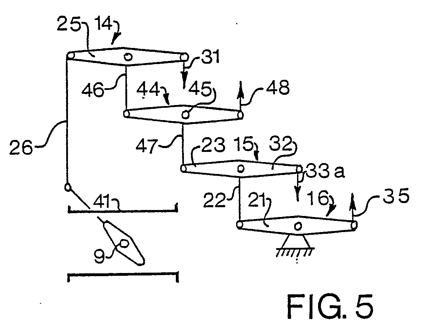

In principle the engine of Figs. 3 and 4 may be controlled in the same manner as explained in connection with Fig. 2, viz. by means of a throttle 9 mounted in the passage 41, such as diagrammatically shown in Fig. 5. To the extent possible, the same reference characters have been used in Fig. 5 as in Fig. 2, and it will therefore be directly understood that at increasing intake temperature the lever 14 is moved in the direction of the arrow 31, whereby the gas fraction to the gas turbine 80 is reduced, while the gas portion to the turbocharge system 5 is increased, and the same result is obtained as above explained. When the lever 21 is moved against the direction of the arrow 35, the throttle 9 is moved in the closing direction and thereby the same compensation effect for dropping turbocharger efficiency is obtained as above explained. The engine of Figs. 3 and 4, too, may be provided with a passage 78, Fig. 3, with a throttle 79 mounted therein, which throttle is kept open when the turbocharge system is operating at its maximum efficiency, and is closd when the initial drop has taken place, and is re-opened only if the whole turbocharge system is renovated.

When on the other hand considering the turning of the lever 15 depending on the engine load, the conditions in Fig. 5 are opposite to those in Fig. 2, the lever 15 being turned in the direction of the arrow 33a, which is opposite to the direction of the arrow 33 in Fig. 2, when the engine load is increased. Thereby the gas fraction to the gas turbine 80 is decreased, and consequently the gas portion to the turbocharge system is increased. However, this control at increasing load is not extended beyond a point such that the permissible maximum pressure is not exceeded. At dropping load the control takes place in the opposite direction, but only down to the minimum load, where it is still possible to utilize the energy of said fraction of the exhaust gas for secondary power production with any advantage and with due regard to the operating conditions of the engine as a whole, i.e. oil consumption and thermal load. Below this range, the exhaust gas fraction for secondary power production is closed off either completely or to the extent permissible with a view to the stability of the turbocharge system. Fig. 5 shows an additional lever 44 with shaft 45 interposed between the two levers 14 and 15, the lever 44 being connected with the levers 14 and 15 by means of rods 46 and 47, which are controlled in the same manner as explained in connection with Fig. 2, but not illustrated in detail in Fig. 5. The lever 44 is used when it is desired to control or adjust the fraction of exhaust gas to the gas turbine, the lever 44 being in that case turned in the direction of the arrow 48. This control or adjustment takes place depending on the demand which may e.g. vary in the course of 24 hours of the day, in the course of the year and depending on the climatic conditions. It will be seen that when the lever 44 is turned in the direction of the arrow 48, the throttle 9 will be moved in the opening direction so that an increasing fraction of exhaust gas is supplied to the gas turbine 80.

In the foregoing the control as such has for simplicity been mentioned as taking place by means of a simple throttle 9. Fig. 6 shows a somewhat more detailed throttle arrangement. As previously mentioned, 80 denotes the gas turbine, and 41 the inlet of the latter. The inlet blade ring of the gas turbine is diagrammatically shown in Fig. 6 and denoted by 50. The inlet to the blade ring 50 is subdivided into three portions 51, 52 and 53, and the admission to each blade ring portion is controlled by means of a throttle 54, 55, and 56, respectively. Moreover, the gas turbine may be constructed with a by-pass 57 which can be controlled by means of a throttle 58 and can be completely closed or opened by means of a throttle 59. By re-setting the throttle 59 from the position shown in Fig. 6 in the direction indicated by an arrow the inlet to the gas turbine is closed and the by-pass 57 is opened so that racing of the gas turbine, e.g. in the case of a sudden drop of the load of the generator operated by the gas turbine, can be avoided. The throttle 58 is then so adjusted that the free passage area of the by-pass 57 corresponds to the free passage area of the portions 51, 52 and 53 at the time when the admission to these is closed by means of the throttle 59, so that the operating conditions of the engine are not changed. The throttles 54, 55 and 56 are in principle used in the same manner as the throttle 9 in Fig. 5. The aim of using the three throttles in Fig. 6 is to obtain a good efficiency of the gas turbine 80 in the following manner: At the commencing shut-off of the fraction of exhaust gas to the gas turbine, one throttle is first gradually closed, and then the second one and finally the third one so that the turbine maintains an acceptable efficiency during the progress of the control. The gas turbine may, if desired, be constructed with a controllable passage area and, if desired, at the same time with the subdivision referred to. The gas turbine 80 is, as shown in Fig. 7, coupled to a generator 60 of well known design.

It will be understood, however, that in cases where a different form of energy is desired, such as heat, the gas turbine with appurtenant generator may be replaced e.g. by a boiler.

From the above explanations it will be understood that the turbocharge system 5 is in reality by-passed to the exhaust system by means of a by-pass passage, and that the maximum area of the latter is advantageously related to the total efficiency of the turbocharge system employed, in such a manner that the maximum utilized area of the by-pass passage is the greater, the higher the efficiency is, meaning that a higher by-passed fraction and thereby a higher amount of energy are available for control, the higher the effiency of the turbocharge system employed is. More specifically, the by-pass area can be put in relation to the ratio:

$$\frac{\eta 2 - \eta 1}{\eta 1} \cdot 100$$

where $\eta 1$, roughly 60%, is the efficiency which has hitherto been considered the minimum efficiency acceptable on delivery of a new engine system, and $\eta 2$ is the efficiency obtainable and commercially available at any particular moment. Typically, the maximum effective by-pass area used in practice during the control will be 1 to 2 times that mentioned above, expressed in percentage of the total equivalent or effective passage area of the turbocharge system in question.

To sum up, it is pointed out that according to the invention one obtains a lower average specific fuel oil consumption, a levelling-out of the thermal load of the engine, and an economic utilization of the heat content of the exhaust gas, and thereby a more profitable overall efficiency is obtained, viz. by the advantageous control of the by-pass area as above explained, the principle of which is that the size of the area is controlled within the upper range in temperate climate, and the higher up, the lower the intake temperature and/or the gas temperature are, and the higher the barometric level, the charging efficiency and the demand for exhaust energy are. Similarly, under tropical conditions the said favourable adjustments are obtained by choosing the size of the area in the lower range, and the lower the higher the intake temperature and/or the gas temperature are, and the lower the barometric level, the charging efficiency and the demand for exhaust gas energy are.

Depending on the wish for more, respectively less exhaust gas energy at partial loads and with due regard to the conditions of operation of the engine, the size of the by-pass area is chosen higher, respectively lower at dropping loads in the range down to about 75% load. At partial loads below 75%, the by-pass area is always chosen the lower, the lower the load is.

**Claims**

1. Method for operating the combination of a diesel engine (1) and a turbocharge system (5), including air cooling means (7) for cooling fresh air to be fed to said engine (1) and means (70) for recovering energy from the exhaust gas from said engine (1) comprising the following steps:
at low intake temperature, feeding said turbocharge system (5) with a portion only of the exhaust gas delivered by the engine (1) and conducting the remaining fraction of the exhaust gas to the atmosphere in by-pass to the turbocharge system (5) and feeding the engine (1) with only the amount of fresh air delivered by said turbocharge system (5) fed by said gas portion, said gas portion being so controlled (at 9) that said amount of fresh air is sufficient for scavenging and charging the engine (1) to operate at the prescribed conditions,
at intake temperature decreasing from said low temperature, increasing the ratio between said gas fraction and said gas portion,
at intake temperature increasing from said low temperature, decreasing the ratio between said gas fraction and said gas portion, and
at said low intake temperature, at said decreasing and at said increasing temperature, conducting both said gas fraction and said gas portion from said turbocharge system (5) to the atmosphere via said energy recovering means (70).

2. Method according to claim 1, wherein said means for recovering energy from said exhaust gas comprise a first and a second energy recovering apparatus (70, 80), said method comprising the further steps of conduction said gas portion from said turbocharge system (5) to the atmosphere via said first energy recovering apparatus (70) only, and conducting said gas fraction to the atmosphere via said second energy recovering apparatus (80) and said first energy recovering (70) apparatus in series.

3. Method according to claim 2, comprising the further step of:
at loads of the engine (1) decreasing from full load to a predetermined partial load; increasing the ratio between said gas fraction and said gas portion.

4. Method according to claim 2, comprising the further step of:
at loads of the engine (1) decreasing from a predetermined partial load: decreasing the ratio between said gas fraction and said gas portion.

5. Method according to claim 2, comprising the further steps of:
at full load of the engine (1) and at partial loads between full load and a predetermined partial load, increasing the ratio between said gas fraction and said gas portion at increasing demand for recovered energy.

6. Method according to claim 1 or 2, comprising the further steps of:

decreasing the ratio between said gas fraction and said gas portion at increasing smudging of said turbocharge system (5) and

increasing said ratio upon cleaning of said turbocharge system (5).

7. The combination of a diesel engine (1) and a turbocharge system (5) connected with the exhaust pipe system (2) of the engine (1) by feeding means (4) for being fed with exhaust gas from said engine (1), said turbocharge system (5) being connected with said engine (1) for supplying fresh scavenging and charging air to said engine via air cooling means (7), said combination comprising means (70, 80) for recovering energy from the exhaust gas from said engine (1), said energy recovering means (70, 80) being connected with the exhaust gas outlet (73) of said turbocharge system (5) so as to receive exhaust gas from said turbocharge system (5), said energy recovering means (70, 80) moreover, being connected with said exhaust pipe system (2) by means of a passage (11) by-passing said turbocharge system (5) so as to receive a fraction of said exhaust gas from said exhaust pipe system (2), throttle means (9) being arranged in said by-pass passage (11) so as to control the ratio between said fraction of exhaust gas passing through said by-pass passage (11) to said energy recovering means (70, 80) and said portion of exhaust gas passing through said feeding means (4) connecting said turbocharge system (5) and said exhaust pipe system (2), said throttle means (9) having a position, wherein the free passage area of said by-pass passage (11) allows only such fraction of said exhaust gas to flow to said energy recovering means (70, 80) that said gas portion fed to said turbocharge system (5) is sufficient for causing said turbocharge system (5) to feed said engine (1) with an amount of air sufficient for scavenging and charging the engine (1) to operate at the prescribed conditions at low intake temperature, said throttle means (9) being controllable by temperature sensing means (at 31) adapted to move said throttle means (9) in direction towards opening of said throttle means (9) at intake temperature decreasing from said low temperature and to move said throttle means (9) in direction towards closing said throttle means (9) at intake temperature increasing from said low temperature.

8. The combination according to claim 7, wherein said energy recovering means comprise a first energy recovering apparatus (70) and a second energy recovering apparatus (80) said first energy recovering apparatus (70) being connected with said exhaust gas outlet (73) of said turbocharge system (5), said first energy recovering apparatus (70) moreover being connected with said by-pass passage (11) downstream of said throttle means (9) and via said second energy recovering apparatus (80).

9. The combination according to claim 7, wherein said throttle means (9) being connected with means (at 33) for controlling the load of said engine (1) in such a way that said throttle means (9) are moved in the opening direction by moving said load controlling means from a position corresponding to full load and to a position corresponding to a predetermined partial load.

10. The combination according to claim 7, wherein said throttle means (9) being connected with means (at 33) for controlling the load of said engine (1) in such a way that said throttle means (9) are moved in the closing direction by moving said load controlling means from a position corresponding to a predetermined partial load and in direction for reducing the load of the engine (1).

11. The combination according to claim 7, wherein said throttle means (9) being connected with means (at 48) for moving said throttle means (9) in direction towards opening said throttle means (9) at increasing demand for energy recovery at full load of said engine (1) and at partial loads between said full load and a predetermined partial load.

12. The combination according to claim 7, wherein said throttle means (9) being connected with means (at 35) for moving said throttle means (9) in direction towards closing said throttle means (9) at increasing smudging of said turbocharge system (5) and moving said throttle means (9) in direction towards opening said throttle means (9) upon cleaning of said turbocharge system.

13. The combination according to claim 7, wherein the free passage area of said by-pass passage (11) in the maximally open position of said throttle means (9) fulfils the following conditions:

$$\frac{\eta 2 - \eta 1}{\eta 1} < \frac{A\ byp.}{A\ tur.} < 2\frac{\eta 2 - \eta 1}{\eta 1}$$

wherein

A byp. is the free passage area of said by-pass passage (11) in said maximally open position of said throttle means (9),

A tur. is the total effective turbine passage area of said turbocharge system (5),

$\eta 1$ is the efficiency of a turbocharge system which is considered the minimum efficiency necessary for supplying said engine (1) with an amount of air sufficient for scavenging and charging the engine (1) to operate at the prescribed conditions at low intake temperature when feeded with the total amount of exhaust gas delivered from the engine (1), and

$\eta 2$ is the efficiency of the turbocharge system (5) constituting a part of said combination.

**Patentansprüche**

1. Verfahren für den Betrieb eines Dieselmotors (1) mit Turboaufladung (5), der eine Kühleinrichtung (7) zum Kühlen der dem Motor (1) zugeführten Frischluft und eine Einrichtung (70) zur Rückgewinnung von Energie aus den Motorabgasen aufweist, dadurch gekennzeichnet,

daß bei niedriger Eintrittstemperatur lediglich ein Teil der von dem Motor (1) erzeugten Abgase dem Turbolader (5) zugeführt wird und daß der übrige Bruchtiel der Abgase unter Umgehung des Turboladers (5) in die Atmosphäre geleitet wird und daß dem Motor (1) lediglich die von dem durch den Teil des Abgases. angetriebenen Turbolader (5) geförderte Frischluftmenge zugeführt wird, wobei der Teil des Abgases so gesteuert wird (bei 9), daß die Frischluftmenge ausreicht zum Spülen und Aufladen des Motors (1) unter den vorgeschriebenen Bedingungen,

daß das Verhältnis zwischen dem Bruchteil und dem Teil des Abgases vergrößert wird, wenn die Eintrittstemperatur gegenüber der niedrigen Temperatur abnimmt,

daß das Verhältnis zwischen dem Bruchteil und dem Teil des Abgases verkleinert wird, wenn die Eintrittstemperatur gegenüber der niedrigen Temperatur zunimmt, und

daß bei der niedrigen Eintrittstemperatur, bei der zunehmenden und bei der abnehmenden Temperatur sowohl der Bruchteil als auch der Teil des Abgases vom Turbolader (5) über die Energierückgewinnungseinrichtung (70) der Atmosphäre zugeführt werden.

2. Verfahren nach Anspruch 1, wobei die Einrichtung zur Rückgewinnung von Energie aus den Abgasen eine erste und zweite Energierückgewinnungsvorrichtung (70, 80) umfaßt, dadurch gekennzeichnet, daß der Teil des Gases vom Turbolader (5) nur über die erste Energierückgewinnungsvorrichtung (70) in die Atmosphäre geleitet wird und daß der Bruchteil der Abgase in Serie über die zweite Energierückgewinnungsvorrichtung (80) und die erste Energierückgewinnungsvorrichtung (70) in die Atmosphäre geleitet wird.

3. Verfahren nach Anspruch 2, dadurch gekennzeichnet, daß das Verhältnis zwischen dem Bruchteil und dem Teil der Abgase vergrößert wird, wenn die Belastung des Motors (1) von der Vollast auf eine vorbestimmte Teillast abnimmt.

4. Verfahren nach Anspruch 2, dadurch gekennzeichnet, daß das Verhältnis zwischen dem Bruchteil und dem Teil der Abgase verkleinert wird, wenn die Last des Motors (1) unter eine vorbestimmte Teillast abfällt.

5. Verfahren nach Anspruch 2, dadurch gekennzeichnet, daß bei Vollast des Motors (1) und einer Teillast zwischen der Vollast und einer vorbestimmten Teillast das Verhältnis zwischen dem Bruchteil und dem Teil der Abgase vergrößert wird, wenn der Bedarf an zurückgewonnener Energie zunimmt.

6. Verfahren nach Anspruch 1 oder 2, dadurch gekennzeichnet, daß das Verhältnis zwischen dem Bruchteil und dem Teil der Abgase verkleinert wird, wenn die Verölung des Turboladers (5) zinimmt, und nach dem Reinigen des Turboladers (5) vorgrößert wird.

7. Dieselmotor (1) mit einem Turbolader (5), der mit dem Auspuffkrümmer (2) des Motors (1) über eine Zuführleitung (4) verbunden ist, die ihn mit Verbrennungsgasen vom Motor (1) versorgt, wobei der Turbolader (5) mit dem Motor (1) verbunden ist, um dem Motor (1) über einen Ladeluftkühler (7) Frischluft zum Spülen und Aufladen zuzuführen, gekennzeichnet durch eine Einrichtung (70, 80) zur Rückgewinnung von Energie aus den Verbrennungsgasen des Motors (1), wobei die Energierückgewinnungseinrichtung (70, 80) mit dem Abgasaustritt (73) des Turboladers (5) verbunden ist, um Abgase vom Turbolader (5) zu empfangen, und wobei die Energierückgewinnungseinrichtung (70, 80) ferner mit dem Auspuffkrümmer (2) über eine Leitung (11) verbunden ist, die den Turbolader (5) umgeht, um einen Bruchteil der Auspuffgase vom Auspuffkrümmer (2) zu,empfangen, wobei in der Umgehungsleitung (11) eine Drossel (9) angeordnet ist, um das Verhältnis zwischen dem Bruchteil der Verbrennungsgase, die durch die Umgehungsleitung (11) zu der Energierückgewinnungseinrichtung (70, 80) strömen, und dem Teil der Verbrennungsgase zu steuern, die durch die Zuführleitung (4) vom Auspuffkrümmer (2) zum Turbolader (5) strömen, wobei die Drossel (9) eine Stellung aufweist, in der die freie Querschnittsfläche der Umgehungsleitung (11) die Durchströmung lediglich eines solchen Bruchteils der Verbrennungsgase zu der Energierückgewinnungseinrichtung (70, 80) erlaubt, daß der dem Turbolader (5) zugeführte Teil der Verbrennungsgase ausreicht, damit der Turbolader (5) dem Motor (1) eine zum Spülen und Aufladen ausreichende Frischluftmenge zuführt, damit der Motor (1) unter den vorgeschriebenen Bedingungen bei niedriger Eintrittstemperatur arbeitet, wobei die Drossel (9) durch einen Temperaturfühler (bei 31) steuerbar ist, der die Drossel (9) in Öffnungsrichtung bewegen kann, wenn die Eintrittstemperatur gegenüber der niedrigen Temperatur abnimmt, und in Schließrichtung bewegen kann, wenn die Eintrittstemperatur gegenüber der niedrigen Temperatur ansteigt.

8. Dieselmotor mit Turboaufladung nach Anspruch 7, dadurch gekennzeichnet, daß die Energierückgewinnungseinrichtung aus einer ersten Energierückgewinnungsvorrichtung (70) und einer zweiten Energierückgewinnungsvorrichtung (80) besteht, wobei die erste Energierückgewinnungsvorrichtung (70) mit der Abgasaustrittsöffnung (73) des Turboladers (5) verbunden ist und wobei die erste Energierückgewinnungsvorrichtung (70) ferner mit der Umgehungsleitung (11) stromabwärts von der Drossel (9) und über die zweite Energierückgewinnungsvorrichtung (80) verbunden ist.

9. Dieselmotor mit Turbofladung nach Anspruch 7, dadurch gekennzeichnet, daß die Drossel (9) mit einer Steuereinrichtung (bei 33) zum Steuern der Leistung des Motors (1) derart verbunden ist, daß die Drossel in Öffnungsrichtung bewegt wird, wenn die Steuereinrichtung von einer der Vollast entsprechenden Stellung in eine einer vorbestimmten Teillast entsprechende Stellung bewegt wird.

10. Dieselmotor mit Turboaufladung nach Anspruch 7, dadurch gekennzeichnet, daß die Drossel (9) mit einer Steuereinrichtung (bei 33) zum Steuern der Leistung des Motors (1) derart verbunden ist, daß die Drossel (9) in Schließrichtung bewegt wird, wenn die Steuereinrichtung von einer einer vorbestimmten Teillast entsprechenden Richtung in eine Richtung zur Verringerung der Leistung des Motors (1) bewegt wird.

11. Dieselmotor mit Turboaufladung nach Anspruch 7, dadurch gekennzeichnet, daß die Drossel (9) mit einer Einrichtung (bei 48) verbunden ist, um die Drossel (9) in Öffnungsrichtung zu bewegen, wenn der Bedarf an Energierückgewinnung bei Vollast des Motors (1) und bei Teillast zwischen der Vollast und einer vorbestimmten Teillast zunimmt.

12. Dieselmotor mit Turboaufladung nach Anspruch 7, dadurch gekennzeichnet, daß die Drossel (9) mit einer Einrichtung (bei 35) verbunden ist, um die Drossel (9) in Schließrichtung zu bewegen, wenn der Turbolader (5) zunehmend verölt, und um die Drossel (9) in Öffungsrichtung zu bewegen, nachdem der Turbolader (5) gereinigt wurde.

13. Dieselmotor mit Turboaufladung nach Anspruch 7, dadurch gekennzeichnet, daß die freie Querschnittsfläche der Umgehungsleitung (11) in der vollständig geöffneten Stellung der Drossel (9) folgender Bedingung entspricht:

$$\frac{\eta2-\eta1}{\eta1} < \frac{A\ byp.}{A\ tur.} < 2\frac{\eta2-\eta1}{\eta1}$$

wobei

A byp. ist die freie Querschnittsfläche der Umgehungsleitung (11) in der maximal offenen Stellung der Drossel (9),

A tur. ist die gesamte wirksame Querschnittsfläche der Turbine des Turboladers (5),

η1 ist der Wirkungsgrad eines Turboladers der als der minimale Wirkungsgrad angesehen wird, der notwendig ist, um den Motor (1) eine zum Spülen und Aufladen ausreichende Frischluftmenge zuzuführen, damit der Motor (1) unter vorgeschriebenen Bedingungen bei niedriger Eintrittstemperatur arbeitet, wenn dem Turbolader die gesamte Abgasmenge des Motors (1) zugeführt wird, und

η2 ist der Wirkungsgrad des verwendeten Turboladers (5).

**Revendications**

1. Procédé pour faire fonctionner la combinaison d'un moteur diesel (1) et d'un système de turbocompresseur (5), comprenant un moyen de refroidissement de l'air (7) pour refroidir l'air frais à introduire dans ledit moteur (1) et un moyen (70) pour récupérer l'énergie des gaz d'échappement dudit moteur (1) comprenant les étapes qui suivent:

à une faible température d'admission, alimenter ledit turbocompresseur (5) d'une portion seulement des gaz d'échappement délivés par le moteur (1) et conduire la fraction restante des gaz d'échappement vers l'atmosphère en dérivation du système de turbocompresseur (5) et n'alimenter le moteur (1) qu'avec la quantité d'air frais délivrée par ledit turbocompresseur (5) fournie par ladite portion de gaz, ladite portion de gaz étant contrôlée (en 9) de façon que ladite quantité d'air frais soit suffisante pour balayer et charger le moteur (1) pour qu'il fonctionne aux conditions prescrites,

à une température d'admission diminuant par rapport à ladite basse températur, augmenter le rapport entre ladite fraction de gaz et ladite portion de gaz,

à une température d'admission augmentant par rapport à ladite basse température, diminuer le rapport entre ladite fraction de gaz et ladite portion de gaz, et

à ladite basse température d'admission, à ladite température diminuant et à ladite température augmentant, conduire ladite fraction de gaz et ladite portion de gaz dudit turbochargeur (5) à l'atmosphère par ledit moyen de récupération d'énergie (70).

2. Procédé selon la revendication 1 où ledit moyen pour récupérer l'énergie desdits gaz d'échappement comprend un premier et un second dispositif de récupération de l'énergie (70, 80), ledit procédé comprenant les étapes supplémentaires de conduire ladite portion de gaz dudit système de turbocompresseur (5) à l'atmosphère par ledit premier dispositif récupération d'énergie (70) uniquement, et de conduire ladite fraction de gaz vers l'atmosphère par ledit second dispositif de récupération d'énergie (80) et ledit premier dispositif de récupération d'énergie (70) en série.

3. Procédé selon la revendication 2, comprenant de plus l'étape de:

aux charges du moteur (1) diminuant de la pleine charge et à une charge partiellement prédéterminée; augmenter le rapport entre ladite fraction de gaz et ladite portion de gaz.

4. Procédé selon la revendication 2 comprenant l'étape supplémentaire de:

aux charges du moteur (1) diminuant d'une charge partielle prédéterminée: diminuer le rapport entre ladite fraction de gaz et ladite portion de gaz.

5. Procédé selon la revendication 2 comprenant de plus les étapes de:

à la pleine charge du moteur (1) et aux charges partielles entre la pleine charge et une charge partielle prédéterminée, augmenter le rapport entre ladite fraction de gaz et ladite portion de gaz à une demande croissante de l'énergie récupérée.

6. Procédé selon la revendication 1 ou 2 comprenant de plus les étapes de:

diminuer le rapport entre ladite fraction de gaz et ladite portion de gaz lors de l'augmentation de la production de fumée épaisse dudit système de turbocompresseur (5) et

augmenter ledit rapport lors du nettoyage dudit système de turbocompresseur (5).

7. Combinaison d'un moteur diesel (1) et d'un système de turbocompresseur (5) connecté à un système d'un tuyau d'échappement (2) du moteur (1) par un moyen d'alimentation (4) pour être alimenté en gaz d'échappement dudit moteur (1), ledit système de turbocompresseur (5) étant connecté audit moteur (1) pour fournir de l'air frais de balayage et de charge audit moteur par un moyen de refroidissement de l'aire (7), ladite combinaison comprenant un moyen (70, 80) pour récupérer l'énergie des gaz d'échappement dudit moteur (1), ledit moyen de récupération de l'énergie (70, 80) étant connecté à la sortie des gaz d'échappement (73) dudit système du turbocompresseur (5) afin de recevoir les gaz d'échappement dudit système de turbocompresseur (5), ledit moyen de récupération de l'énergie (70, 80), étant par ailleurs connecté audit système du tuyau d'échappement (2) au moyen d'un passage (11) contourant ledit système de turbocompresseur (5) afin de recevoir une fraction desdits gaz d'échappement dudit système du tuyau d'échappement (2), un moyen d'étranglement (9) étant agencé dans ledit passage de contournement (11) afin de contrôler le rapport entre ladite fraction des gaz d'échappement passant par ledit passage de contournement (11) vers ledit moyen de récupération de l'énergie (70, 80) et ladite portion des gaz d'échappement passant par ledit moyen d'alimentation (4) reliant ledit système de turbocompresseur (5) et ledit système de tuyau d'échappement (2), ledit moyen d'étranglement (9) ayant une position où l'aire de passage libre dudit passage de contournement (11) ne permet qu'à une fraction des gaz d'échappement de s'écouler vers le moyen de récupération de l'énergie (70, 80), telle que ladite portion de gaz introduite audit système de turbocompresseur (5) soit suffisante pour forcer ledit système de turbocompresseur (5) à alimenter ledit moteur (1) en une quantité d'aire suffisante pour balayer et charger le moteur (1) pour qu'il fonctionne aux conditions prescrites à une faible température d'admission, ledit moyen d'étranglement (9) étant réglable par un moyen détectant la température (en 31) adapté à déplacer ledit moyen d'étranglement (9) dans une direction vers l'ouverture dudit moyen d'étranglement (9) à une température d'admission diminuant de ladite basse température et à déplacer ledit moyen d'étranglement (9) dans une direction vers la fermeture dudit moyen d'étranglement (9) à une température d'admission augmentant par rapport à ladite basse température.

8. Combinaison selon la revendication 7 où ledit moyen de récupération d'énergie comprend un premier dispositif de récupération d'énergie (70) et un second dispositif de récupération d'énergie (80), ledit premier dispositif de récupération de l'énergie (70) étant connecté à ladite sortie des gaz d'échappement (73) dudit système de turbocompresseur (5), ledit premier dispositif de récupération d'énergie (70) étant par ailleurs connecté audit passage de dérivation (11) en aval dudit moyen d'étranglement (9) et par ledit second dispositif de récupération d'énergie (80).

9. Combinaison selon la revendication 7 où ledit moyen d'étranglement (9) étant connecté à un moyen (en 33) pour contrôler la charge dudit moteur (1) de façon que ledit moyen d'étranglement (9) soit déplacé en direction d'ouverture en déplaçant ledit moyen contrôlant la charge d'une position correspondant à la pleine charge et à une position correspondant à une charge partielle prédéterminée.

10. Combinaison selon la revendication 7 où ledit moyen d'étranglement (9) etant connecté à un moyen (en 33) pour contrôler la charge dudit moteur (1) de façon que ledit moyen d'étranglement (9) soit déplacée en direction de fermeture en déplaçant ledit moyen contrôlant la charge d'une position correspondant à une charge partielle prédéterminée et dans une direction pour réduire la charge du moteur (1).

11. Combinaison selon la revendication 7 où ledit moyen d'étranglement (9) étant connecté à un moyen (en 48) pour déplacer ledit moyen d'étranglement (9) dans une direction vers l'ouverture dudit moyen d'étranglement (9) lors d'une demande croissante de récupération d'énergie à la pleine charge dudit moteur (1) et à des charges partielles entre ladite pleine charge et une charge partielle prédéterminée.

12. Combinaison selon la revendication 7 où ledit moyen d'étranglement (9) étant connecté à un moyen (en 35) pour déplacer ledit moyen d'étranglement (9) dans une direction vers la fermeture dudit moyen d'étranglement (9) à l'augmentation de la production de fumées épaisses dudit système de turbocompresseur (5) et pour déplacer ledit moyen d'étranglement (9) dans une direction vers l'ouverture dudit moyen d'étranglement (9) lors du nettoyange dudit système de turbocompresseur.

13. Combinaison selon la revendication 7 où l'aire de passage libre dudit passage de contournement (11) à la position ouverte au maximum dudit moyen d'étranglement (9) remplit les conditions qui suivent:

$$\frac{\eta2-\eta1}{\eta1} < \frac{A \text{ cont.}}{A \text{ tur.}} < 2\frac{\eta2-\eta1}{\eta1}$$

où
A cont. est l'aire de passage libre dudit passage de contournement (11) à la position ouverte au maximum dudit moyen d'étranglement (9)
A tur. est l'aire effective totale de passage de la turbine du système de turbocompresseur (5),
$\eta1$ est l'efficacité d'un système de turbocompresseur qui est considérée comme étant l'efficacite minimale nécessaire pour alimenter ledit moteur (1) d'une quantité d'aire suffisante pour balayer et charger le moteur (1) pour qu'il fonctionne aux conditions prescrites à une faible température d'admission lorsqu'il reçoit la quantité totale des gaz d'échappement délivrés du moteur (1), et

η2 est efficacité du systéme de turbo-compresseur (5) faisant partie de ladite combinaison.

FIG. 1

FIG. 2

FIG.3

FIG.4

FIG. 5

FIG.6

FIG.7

0 058 678